# EUROPÄISCHE PATENTSCHRIFT

(11) **EP 1 195 338 B1**
(45) Veröffentlichungstag und Bekanntmachung des Hinweises auf die Patenterteilung: **02.03.2005**
(21) Anmeldenummer: 00120511.1
(22) Anmeldetag: 20.09.2000
(51) Int. Cl.: B65G 57/30

(54) **Maschine und Verfahren zum automatischen Stapeln von Stapelgut, wie z. B. Steigen, Kisten odgl.**
Device and method for automatically stacking items like crates, boxes a.s.o
Dispositif et procéde automatique d'empilage d'articles, par example caisses, boîtes etc

(43) Veröffentlichungstag der Anmeldung: 10.04.2002
(73) Patentinhaber: Fiederling, Karl, 97070 Würzburg (DE)
(72) Erfinder: Fiederling, Karl, 97070 Würzburg (DE)
(74) Vertreter: Pöhner, Wilfried Anton, Dr.

(56) Entgegenhaltungen:
- DE-A- 4 109 293
- GB-A- 2 353 776
- US-A- 5 882 176

## Beschreibung

Die Erfindung bezieht sich auf ein Maschine zum automatischen Stapeln von Stapelgut, wie z. B. Steigen, Kisten odgl.,
- mit einem Förderer, Stapelgut horizontal in einen Stapelbereich verschiebbar ist, daß
- mit einem Signalgeber das Erreichen einer hinteren Sollposition des Stapelgutes im Stapelbereich signalisierbar ist, daß
- mit einem Hebezeug das im Stapelbereich befindliche Stapelgut vertikal nach oben verschiebbar ist, daß
- das Hebezeug von dem Signalgeber ansteuerbar ist, mit dem das Erreichen der hinteren Sollposition signalisierbar ist, daß
- mit in Eingriff mit dem Stapelgut bringbaren Haltern das Stapelgut in einer Sollhöhe haltbar ist, daß
- die in Eingriff mit dem Stapelgut bringbaren Halter durch das Erreichen der Sollhöhe des mit dem Hebezeug anhebbaren Stapelgutes auslösbar sind, daß
- mit einem Signalgeber das Erreichen einer Sollstapelhöhe signalisierbar ist.

Steigen befinden sich in großer Anzahl im Wirtschaftskreislauf. Sie werden zum Transport und zur Aufbewahrung diverser Stückgüter etwa im Obst- und Gemüsebereich, in Bäckereien und Fleischerein u.s.w. eingesetzt. Die Steigen können sich durchaus in ihrer Farbe oder in ihrer Höhe unterscheiden, üblicherweise besitzen sie aber eine einheitliche Grundfläche, die in der Regel 40 auf 60 cm beträgt. Es ist notwendig, die Steigen nach ihrem Gebrauch zu waschen, da oftmals Papier-, Gemüse-, oder andere Reste der transportierten Güter in der Steige verbleiben und die Steigen somit beim Transport oder der Aufbewahrung verschmutzen. Das Waschen der Steigen geschieht maschinell, indem sie sukzessive eine Waschanlage durchlaufen. Dies gilt auch für die sog. Klappsteige, die während des Transportes zusammengeklappt sind. Das Beschicken bzw. die Entnahme erfolgt in der Regel per Hand. Dazu legt eine Bedienungsperson ein oder zwei Steigen per Hand auf ein Förderband auf, das die Steigen der Waschanlage zuführt. Nach dem Verlassen der Waschanlage sind die Steigen durch eine weitere Bedienungsperson nach oben offen auszurichten.

Es ist bekannt, das Stapeln dieser Steige durch Roboter verzunehmen. Das Problem bei dieser Lösung ist allerdings, daß der Roboter nur eine vergleichsweise geringe Arbeitshöhe aufweisen, sodaß es aus technischen Gründen erforderlich ist, den Roboter am Stapel in der Höhe zu verfahren, um die gesamte Stapelhöhe abdecken zu können. Das Verfahren des Roboters ist natürlich umständlich und verlangsamt den Stapelvorgang. Es ist denkbar, daß das geschilderte Stapelproblem auch bei Kartonaufrichtemaschinen oder im Zusammenhang mit Getränkekisten entsteht. Die Erfindung erfaßt darum ausdrücklich auch dieses Stapelgut, auch wenn bisher und nachfolgend beispielhaft auf Steigen Bezug genommen wird.

Aus der US-A- 5 882 176 ist bereits bekannt, das vereinzelt ankommende Stapelgut bis zu einer Mindesthöhe anzuheben, das nächste Exemplar darunter zu schieben und diesen Vorgang sukzessive so lange fortzusetzen, bis die gewünschte Höhe des Stapels erreicht wird. Der Stapel wird dann als Ganzes abgesetzt und auf dem Förderband in Verlängerung der Andienrichtung weiter bewegt. Ob und ggf. auf welche Art und Weise das Bestücken einer Palette erfolgen soll, ist nicht offenbart.

Das Ziel der Erfindung ist es, eine Maschine zu schaffen, mit der das Stapeln der sukzessive ankommenden Stapelguts maschinell so geleistet wird, daß sie auf einer Palette aufgestapelt sind und sofort mit Flurfördergeräten abtransportiert werden können.

Diese Aufgabe wird durch die kennzeichnenden Merkmale des Patentanspruchs 1 gelöst.

Erfindungsgemäß besteht die Maschine aus automatischen Stapeln von Steigen aus einem von unten angreifenden Förderer, der die einzelnen Steigen sukzessive zuführt und die Steigen in den Stapelbereich einschiebt. Dies könnte beispielsweise ein Förderband sein. Im Stapelbereich sind Bodenführungsschienen angebracht, auf die die Steigen vom Förderer geschoben werden, sodaß das seitliche Ausbrechen der Steigen verhindert wird. Durch das Anschlagen der nachfolgenden Steigen, die vom Förderer zugeführt werden, treten Erschütterungen auf, die zu einem Verschieben der Steigen führen können. Aus diesem Grunde ist an der Bodenführungsschiene förderseitig eine Fixierklappe angebracht, die von den eingeschobenen Steigen bei Erreichen der vorgesehenen Sollposition derart in Bewegung versetzt wird, daß die Fixierklappe die Steigen randseitig von unten erfaßt und so fixiert hält. Derartige Vorrichtungen sind dem Fachmann bekannt. Die damit erreichte genaue Positionierung ist wichtig, damit die einzelnen übereinandersitzenden Stapelebenen richtig einrasten können. Andernfalls ist der Stapel mit wachsender Höhe in hohem Maße instabil aufgebaut. An der hinteren Sollposition der ersten Steige, die von der förderseitig nachschiebenden zweiten Steige nach hinten verschoben wird, ist ein Signalgeber angebracht, der signalisiert, wann die erste der beiden im Stapelbereich eingeschobenen Steigen die hintere Sollposition erreicht hat. Wenn diese auslösende Bedingung erfüllt ist, sind zwei Steigen in der gewünschten Weise und an der vorgesehenen Position im Stapelbereich. Durch das Signal wird darum ein angebrachtes Hebezeug in Gang gesetzt, das die im Stapelbereich nebeneinanderstehenden Steigen nach oben verschiebt. Die erfindungsgemäße Maschine beinhaltet weiterhin in einer Sollhöhe angebrachte Halter, die bei Erreichen der Sollhöhe durch die vom Hebezeug angehobenen Steigen mit den Steigen in Eingriff gebracht werden, sodaß sie seitlich untergreifend, randseitig anliegend die Steigen in der Sollhöhe festhalten. Die Sollhöhe beträgt zweckmäßigerweise etwas mehr als es der Höhe einer auf den Bodenführungsschienen aufliegenden Steige entspricht. Das Hebezeug fährt nach dem Festhalten der Steigen wieder abwärts, sodaß erneut Steigen in der oben beschriebenen Weise in den Stapelbereich eingeschoben werden können. Die gewünschte Stapelhöhe kann mittels eines Zählwerkes festgestellt werden, das sich etwa voreinstellen läßt; gleiches kann über einen in der Höhe verstellbaren optischen oder mechanischen Signalgeber geleistet werden, der anzeigt, wann der sukzessive von unten aufgebaute Stapel die gewünschte Stapelhöhe erreicht hat. Ein Zählwerk ließe sich an verschiedenen Positionen anbringen. Zum einen kann es sich bodenseitig vor dem Stapelbereich befinden, sodaß die Anzahl der in den Stapelbereich eingelaufenen Steigen gezählt wird. Es ließe sich aber auch an den nach oben verlaufenden Führungsschienen oder dem Hebezeug anbringen, sodaß die Zahl der gestapelten Ebenen und nicht die der Steigen erfaßt wird. Wenn die gewünschte Stapelhöhe erreicht ist, wird der Doppelstapel von einem Hubzylinder horizontal verfahren, seitlich verschoben und auf Schienen aufgelegt. Alternativ kann der Stapel auch auf eine geeignete Palette abgesetzt werden.

Nach Anspruch 2 ist es vorteilhaft, daß im Anschluß an den ersten Doppelstapel ein zweiter Doppelstapel in der für den ersten Stapel beschriebenen Form erzeugt wird, der ebenfalls von dem Hubzylinder nach außen verbracht wird, sodaß er zusammen mit dem ersten Doppelstapel eine Grundfläche von insgesamt vier Steigen abdeckt.

Diese zwei nach Anspruch 3 mit Vorteil auf Schienen aufliegenden Doppelstapel können auf eine darunter liegenden Euro-Palette abgesetzt werden. Dies erleichtert den Weitertransport durch einen Gabelstapler oder ein anderes Flurfördergerät, das in einfacher Weise die Euro-Palette seitlich untergreifen und die auf der Euro-Palette gestapelten Steigen somit schnell ihrer weiteren Verwendung zuführen kann.

Es ist vorteilhaft, daß der die Steigen zuführende Förderer nicht bis in den Stapelbereich hineinreicht, sondern am Rand des Stapelbereiches endet. Das Anschlagen der nachschiebenden Steigen wird auf diese einfache Weise reduziert.

In einer Weiterbildung der Erfindung wird vorgeschlagen, daß das Erreichen der hinteren Sollposition von einer dort angebrachten Fotozelle signalisiert wird. Derartige Bauteile sind günstig und zuverlässig.

Eine weitere Ausgestaltung der Erfindung sieht vor, daß nach oben verlaufende, eine Grundfläche von zwei nebeneinander liegenden Steigen einschließende Führungsschienen angebracht sind. Insbesondere bei großen Stapelhöhen wird mit diesen Führungsschienen ein Umfallen der Stapel vermieden, da ein befestigender seitlicher Halt gerade auch der oberen Stapelebenen gewährleistet ist.

Am Eingang des Stapelbereiches an den Bodenführungsschienen angebrachte Leitplanken, die von oben betrachtet eine sich zum Stapelbereich verjüngende Trichterform aufweisen, sorgen dafür, daß auch leicht seitlich versetzt vom Förderer nachgeschobene Steige auf die Bodenführungschienen eingeschoben werden, ohne daß sie am Eingang verkanten und so einen Rückstau bewirken, oder gedreht in den Stapelbereich einlaufen. Beides würde eine Störung der Stapelanlage bedeuten, die zunächst zu beheben wäre, bevor die Stapelmaschine erfindungsgemäß weiterlaufen kann.

In den Figuren ist die Erfindung an einer beispielhaften Ausführungsform dargestellt. Es zeigen:
- **Figur 1**: eine Seitenansicht von halb rechts auf die Maschine zum automatischen Stapeln von Steigen nach der Erfindung, ohne Steigen und Förderer,
- **Figur 2**: wie **Figur 1** aber mit Steigen und Förderer,
- **Figur 3**: eine Aufsicht auf eine erfindungsgemäße Maschine zum automatischen Stapeln von Steigen.

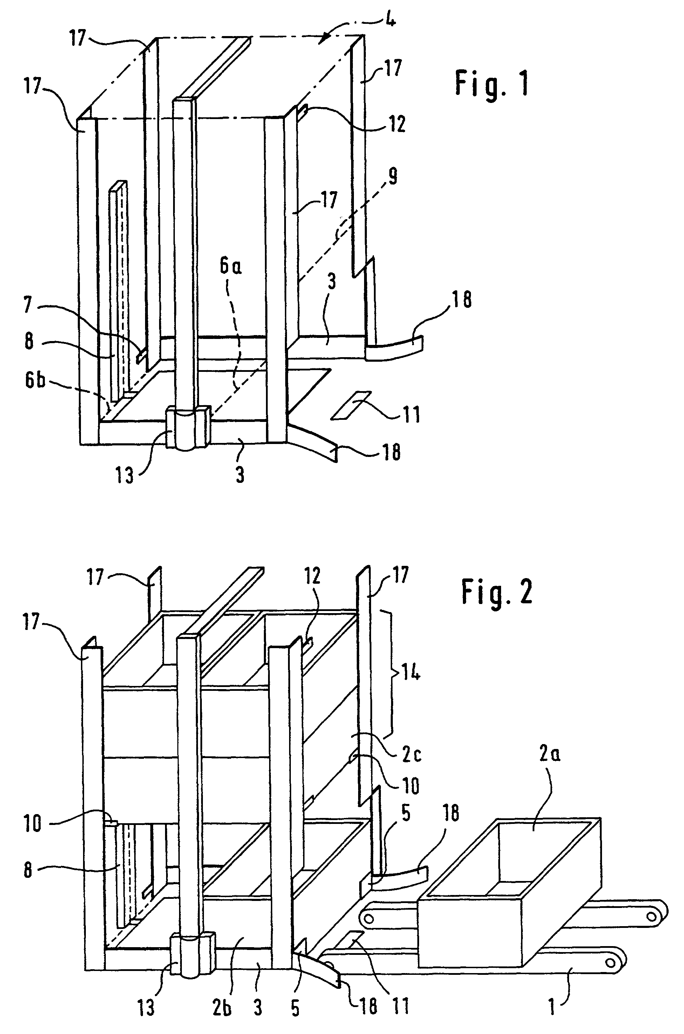

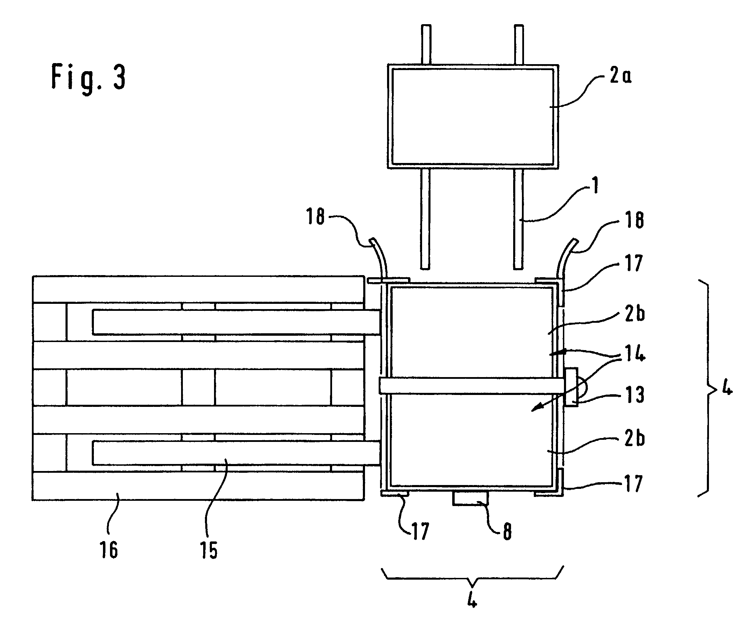

In den Figuren ist eine Maschine zum automatischen Stapeln von Steigen gezeigt. Mit (1) ist ein Förderer bezeichnet, der die Steigen (2) sukzessive über Bodenführungsschienen (3) in den Stapelbereich (4) einschiebt. An diesen Bodenführungsschienen (3) ist förderseitig eine Fixierklappe (5) angebracht, die die Steigen (2) randseitig von unten erfaßt, wenn die einlaufenden Steigen (2) bei Erreichen der ersten Sollposition (6a) im Stapelbereich (4) die Fixierklappe (5) in Bewegung versetzen. An der hinteren Sollposition (6b) ist ein Signalgeber (7) angebracht, der dem Hebezeug (8) signalisiert, daß die erste Steige (2a), von der förderseitig nachgeschobenen zweiten Steige angetrieben, seine hintere Sollposition (6b) erreicht hat. Das Hebezeug (8) ist im vom **Figur 1** gezeigten Ausführungsbeispiel an der Hinterseite des Stapelbereiches (4) angebracht. Weiterhin ist dort zu sehen, daß in einer Sollhöhe (9) Halter (10) angebracht sind, die mit den Steigen (2) randseitig anliegend und seitlich untergreifend in Eingriff gebracht werden, wenn die vom Hebezeug (8) angehobenen Steigen (2) die Sollhöhe (9) erreicht haben. Ein Zählwerk (11), das im gezeigten Beispiel förderseitig vor dem Stapelbereich angebracht ist, oder ein Höhensignalgeber (12), angebracht auf der gewünschten Stapelhöhe, geben einem Hubzylinder (13) das Signal, den Doppelstapel (14) seitlich nach außen zu verbringen und auf Ablageschienen (15) abzusetzen. Unter den Ablageschienen (15) ist in **Figur 3** eine Euro-Palette (16) gezeigt. In **Figur 1** sind weiterhin nach oben verlaufende, eine Grundfläche von zwei nebeneinanderliegenden Steigen einschließende Höhenführungsschienen (17) gezeigt, die an den Anfängen bzw. Enden der Bodenführungsschienen (3) ansetzen. Förderseitig sind an den Bodenführungsschienen (3) Leitplanken (18) angebracht, die von oben betrachtet eine sich zum Stapelbereich (4) verjügende Trichterform aufweisen.

## Patentansprüche

1. Maschine zum automatischen Stapeln von Stapelgut, wie z. B. Steigen (2), Kisten odgl.,
- mit einem Förderer (1) Stapelgut (2a) horizontal in einen Stapelbereich (4) verschiebbar ist, daß
- mit einem Signalgeber (7) das Erreichen einer hinteren Sollposition (6b) des Stapelgutes (2b) im Stapelbereich (4) signalisierbar ist, daß
- mit einem Hebezeug (8) das im Stapelbereich (4) befindliche Stapelgut (2b) vertikal nach oben verschiebbar ist, daß
- das Hebezeug (8) von dem Signalgeber (7) ansteuerbar ist, mit dem das Erreichen der hinteren Sollposition (6b) signalisierbar ist, daß
- mit in Eingriff mit dem Stapelgut (2c) bringbaren Haltern (10) das Stapelgut (2c) in einer Sollhöhe (9) haltbar ist, daß
- die in Eingriff mit dem Stapelgut (2c) bringbaren Halter (10) durch das Erreichen der Sollhöhe (9) des mit dem Hebezeug (8) anhebbaren Stapelgutes (2c) auslösbar sind, daß
- mit einem Signalgeber (12) das Erreichen einer Sollstapelhöhe signalisierbar ist,
**dadurch gekennzeichnet, daß** ein Förderer (13) vorhanden ist, der den Stapel der Sollstapelhöhe anhebt, seitlich und horizontal verschiebt, und daß
- der Förderer (13) von dem Signalgeber (12) ansteuerbar ist, mit dem das Erreichen der Sollstapelhöhe signalisierbar ist.

2. Maschine nach Anspruch 1,
**dadurch gekennzeichnet, daß**
in den Stapelbereich (4) zwei Exemplare des Stapelgutes (2a) vom Förderer (1) horizontal einschiebbar sind.

3. Maschine nach Anspruch 1 oder 2,
**dadurch gekennzeichnet, daß**
Bodenführungsschienen (3) im Stapelbereich (4) angebracht sind.

4. Maschine nach Anspruch 3,
**dadurch gekennzeichnet, daß**
förderseitig an den Bodenführungsschienen (3) eine Fixierklappe (5) angebracht ist, die insbesondere von dem einlaufenden Stapelgut (2b) bei Erreichen der Sollposition (6a) derart in Bewegung versetzbar ist, daß die Fixierklappe (5) das Stapelgut (2b) randseitig von unten erfaßt.

5. Maschine nach einem der vorhergehenden Ansprüche, **dadurch gekennzeichnet, daß**
in Sollhöhe (9) seitlich untergreifende, randseitig anliegende Halter (10) zum Halten des angehobenen Stapelgutes (2c) angebracht sind.

6. Maschine nach einem der vorhergehenden Ansprüche, **dadurch gekennzeichnet, daß**
der den Stapel (14) aus dem Stapelbereich (4) verschiebende Förderer ein Hubzylinder (13) ist, der derart ansteuerbar ist, daß neben einem ersten Stapel (14) der Sollstapelhöhe ein zweiter Stapel der Sollstapelhöhe absetzbar ist.

7. Maschine nach einem der vorhergehenden Ansprüche, **dadurch gekennzeichnet, daß**
außerhalb des Stapelbereiches (4) Schienen (15) angebracht sind, auf die zwei Stapel (14) der Sollstapelhöhe vom Förderer (13) absetzbar sind,
daß insbesondere unter den Schienen (15) eine Euro-Palette (16) angeordnet ist,
und daß insbesondere die Schienen (15) auf die Euro-Palette (16) absenkbar und die beiden auf den Schienen (15) aufgesetzten Stapel (14) auf die Euro-Palette (16) absetzbar ausgebildet sind.

8. Maschine nach einem der vorhergehenden Ansprüche, **dadurch gekennzeichnet, daß**
der das Stapelgut (2a) in den Stapelbeich (4) verschiebende Förderer (1) nicht bis in den Stapelbereich (4) hineinreicht.

9. Maschine nach einem der vorhergehenden Ansprüche, **dadurch gekennzeichnet, daß**
an der hinteren Sollposition (6b) im Stapelbereich (4) eine Fotozelle als Signalgeber (7) angebracht ist.

10. Maschine nach einem der vorhergehenden Ansprüche, **dadurch gekennzeichnet, daß**
vertikal nach oben verlaufende Führungsschienen (17) angebracht sind.

11. Maschine nach einem der vorhergehenden Ansprüche, **dadurch gekennzeichnet, daß**
am Eingang des Stapelbereiches (4) an den Bodenführungsschienen (3) Leitplanken (18) angebracht sind, die von oben betrachtet eine sich zum Stapelbereich (4) verjüngende Trichterform aufweisen.

## Claims

1. Machine for automatic stacking of stackable articles, such as crates (2), boxes or the like, wherein
- by means of a conveyor (1), the stackable goods can be transferred horizontally into a stacking area (4),
- by means of a signal transmitter (7), the reaching of a rear predetermined position (6b) of the stackable goods (2b) in the stacking region can be signalled
- by means of a lifting means (7), the stackable goods (2b) located in the stacking region (4) can be displaced vertically upward,
- the lifting means (8) can be actuated by means of a signal transmitter (7), by means of which the reaching of the rear predetermined position (6b) can be signalled,
- the stackable goods (2c) can be held at a predetermined height (9) by means of holders (10) which can be brought into engagement with the stackable goods (2c),
- the holders (10), which can be brought into engagement with the stackable goods (2c), can be triggered when the stackable goods (2c), which are liftable by means of the lifting means, reach the predetermined height,
- the reaching of a predetermined stack height can be signalled by means of a signal transmitter (12), **characterised in that** a conveyor (13) is present, which lifts the stack of the predetermined stack height laterally and horizontally, and **in that**
- the conveyor (13) can be actuated by the signal transmitter (12), by means of which the reaching of the predetermined stack height can be signalled.

2. Machine according to claim 1, **characterised in that**, in the stacking region (4), two items of the stackable goods (2a) can be slid horizontally by the conveyor (1).

3. Machine according to claim 1 or 2, **characterised in that** the floor rails (3) are mounted in the stacking region (4).

4. Machine according to claim 3, **characterised in that**, on the floor rail (3) at the conveyor side, a fixing flap (5) is mounted, which is set into movement in particular by the incoming stackable goods (2b) when it reaches the provided predetermined position, such that the fixing flap (5) catches the stackable goods (2b) at their edges from below.

5. Machine according to one of the preceding claims, **characterised in that** holders (10) are attached at a predetermined height (9), which, engaging laterally beneath and bearing against them, hold the stackable goods (2c).

6. Machine according to one of the preceding claims, **characterised in that** the conveyor transferring the stack (14) out of the stacking region (4) is a lifting cylinder (13), which can be actuated such that a second stack of the predetermined stack height can be deposited next to a first stack (14).

7. Machine according to one of the preceding claims, **characterised in that** rails (15) are mounted outside the stacking region (4), on which the two stacks (14) can be deposited by the conveyor (13), **in that** a Europallet (16) is arranged, in particular, beneath the rails (15), and that in particular the rails (15) can be lowered onto the Euro pallet (16), and the two stacks (14) positioned on the rails are designed such that they can be deposited on the Euro pallet (16).

8. Machine according to one of the preceding claims, **characterised in that** the conveyor (1) transferring the stackable goods (2a) into the stacking region (4) does not extend into the stacking region (4).

9. Machine according to one of the preceding claims, **characterised in that** a photocell as signal transmitter (7) is mounted at the rear predetermined position (6b) in the stacking region (4).

10. Machine according to one of the preceding claims, **characterised in that** vertically upwardly extending rails (17) are mounted.

11. Machine according to one of the preceding claims, **characterised in that**, guide boards (18) are mounted on the floor guide rails (3) at the entrance to the stacking region (4), which, seen from above, have a funnel shape that tapers towards the stacking region (4).

## Revendications

1. Machine d'empilage automatique d'objets gerbables tels que cageots (2), caisses ou objets semblables,
- l'objet à empiler (2a) pouvant être amené dans l'espace d'empilage (4) au moyen d'un convoyeur (1) de telle sorte
- qu'un transmetteur de signaux (7) signale l'arrivée de l'objet à empiler (2b) à la position de consigne arrière (6b) dans l'espace d'empilage (4),
- que l'objet à empiler (2b) se trouvant dans l'espace d'empilage (4) puisse être soulevé à la verticale vers le haut par un système de levage (8),
- que le système de levage (8) est déclenché par le transmetteur de signaux (7) qui signale l'arrivée de l'objet à empiler (2b) à la position de consigne arrière (6b),
- que les butées (10) qui agrippent l'objet à empiler (2c) maintiennent celui-ci à la hauteur de consigne (9),
- que les butées (10) qui agrippent l'objet à empiler (2c) soulevé par le système de levage (8) soient déclenchées lorsque l'objet à empiler (2c) a atteint la hauteur de consigne (9),
- qu'un transmetteur de signaux (12) signale l'arrivée à une hauteur d'empilage de consigne,
**caractérisée en ce que** un élévateur (13) soulève la pile à la hauteur d'empilage de consigne et la pousse latéralement et horizontalement **et en ce que**
- l'élévateur (13) est piloté par le transmetteur de signaux (12) qui signale l'arrivée à la hauteur d'empilage de consigne.

2. Machine selon la revendication 1,
**caractérisée en ce que**
le convoyeur (1) permet d'amener deux exemplaires de l'objet à empiler (2a) dans l'espace d'empilage (4).

3. Machine selon la revendication 1 ou 2,
**caractérisée en ce que**
les rails de guidage au sol (3) pénètrent dans la zone d'empilage (4).

4. Machine selon la revendication 3,
**caractérisée en ce que**
un clapet de fixation (5) est monté sur les rails de guidage au sol (3) du côté du convoyeur (1). Lorsque l'objet à empiler (2b) qui rentre dans l'espace d'empilage (4) arrive à la position de consigne (6a), il actionne ce clapet de fixation (5) qui le saisit sur les bords par en dessous.

5. Machine selon l'une des revendications précédentes,
**caractérisée en ce que**
des butées (10) sont montées sur les côtés à la hauteur de consigne (9) pour maintenir par en dessous l'objet à empiler (2c) soulevé.

6. Machine selon l'une des revendications précédentes,
**caractérisée en ce que**
l'élévateur qui pousse la pile (14) hors de l'espace d'empilage (4) est un vérin hydraulique (13) permettant d'amener une deuxième pile à la hauteur de consigne, à côté de la première pile (14).

7. Machine selon l'une des revendications précédentes,
**caractérisée en ce que**
des rails (15) situés en dehors de l'espace d'empilage (4) permettent de déposer les deux piles (14) soulevées à la hauteur de consigne par l'élévateur (13),
**et en ce que**
une europalette (16) est placée sous les rails (15),
et notamment **en ce**
**que** les rails (15) peuvent s'abaisser sur l'europalette (16) et les deux piles (14) se trouvant sur les rails (15) sont constituées de telle sorte que l'on peut les déposer sur l'europalette (16).

8. Machine selon l'une des revendications précédentes,
**caractérisée en ce que**
le convoyeur (1) qui pousse l'objet à empiler (2a) dans l'espace d'empilage (4) ne rentre pas dans ce dernier.

9. Machine selon l'une des revendications précédentes,
**caractérisée en ce que**
une cellule photoélectrique montée dans l'espace d'empilage (4) fait office de transmetteur de signal (7) et surveille la position de consigne arrière.

10. Machine selon l'une des revendications précédentes,
**caractérisée en ce que**
des rails-guides (17) verticaux sont montés aux quatre coins.

11. Machine selon l'une des revendications précédentes,
**caractérisée en ce que**
la zone d'entrée de l'espace d'empilage (4) est délimitée par des rails de sécurité (18) montés sur les rails de guidage au sol (3), ces rails de sécurité (18), vus d'en haut, formant un entonnoir rétrécissant en direction de l'espace d'empilage (4).
